# EUROPEAN PATENT APPLICATION

(11) **EP 4 742 021 A1**
(43) Date of publication of application: **13.05.2026**
(21) Application number: 24882779.2
(22) Date of filing: 22.10.2024
(51) Int. Cl.: G06F 3/04845, G06F 3/0482, G06F 3/04883, G06T 7/155, G06T 7/70, G06T 7/50, G06T 7/11, G06T 15/50, G06T 11/60

(54) **ELECTRONIC DEVICE FOR GENERATING IMAGE ON BASIS OF LIGHTING ARRANGEMENT AND METHOD THEREOF**

(30) Priority: 23.10.2023 KR 20230142390; 21.11.2023 KR 20230162015
(71) Applicant: Samsung Electronics Co., Ltd., Suwon-si, Gyeonggi-do 16677 (KR)
(72) Inventor: HYUN, Daeyoung, Suwon-si, Gyeonggi-do 16677 (KR); KIM, Sungtae, Suwon-si, Gyeonggi-do 16677 (KR); MUN, Jihun, Suwon-si, Gyeonggi-do 16677 (KR); PARK, Jiyoon, Suwon-si, Gyeonggi-do 16677 (KR); YOO, Nagyeom, Suwon-si, Gyeonggi-do 16677 (KR)
(74) Representative: Gulde & Partner
(86) International application number: PCT/KR2024/016094
(87) International publication number: WO 2025/089752

(57) **Abstract**

An electronic device disclosed herein may perform the operations of displaying a first image, receiving a gesture input to the first image, identifying a shape configured by the gesture input and a position on the first image of the gesture input, identifying, based on the gesture input, space information of the first image, determining, based on the space information, lighting information corresponding to the shape and position, and generating a second image by applying, based on the space information, the lighting information to the first image.

## Description

### [Technical Field]

Embodiments of the disclosure relate to an electronic device for generating an image based on lighting arrangement and a method thereof.

### [Background Art]

With the development of digital technology, various types of electronic devices, such as a mobile communication terminal, a personal digital assistant (PDA), an electronic note, a smartphone, a tablet personal computer (PC), and a wearable device, have been widely used. Such electronic devices are continuously improved in hardware parts and/or software parts in order to support and increase functions of the electronic devices.

Users may want to generate images by applying various image effects in a process of capturing images through an electronic device or applying various image effects to previously-captured images. To this end, various image processing techniques have been developed.

The above information may be presented as related art for the purpose of assisting in understanding the disclosure. No assertion or decision is made as to whether any of the above might be applicable as prior art with regard to the disclosure.

### [Disclosure of Invention]

### [Solution to Problem]

An electronic device according to embodiments disclosed herein may include a touch display, a memory including an instruction, and a processor. The instruction may be configured to, when executed by the processor, cause the electronic device to display a first image through the display, receive a gesture input to the first image, identify a shape configured by the gesture input and a position on the first image of the gesture input, identify, based on the gesture input, space information of the first image, and determine, based on the space information, lighting information corresponding to the shape and position. The instruction may be configured to, when executed by the processor, cause the electronic device to generate a second image by applying, based on the space information, the lighting information to the first image.

A method of an electronic device according to various embodiments may include displaying a first image, receiving a gesture input to the first image, identifying a shape configured by the gesture input and a position on the first image of the gesture input, identifying, based on the gesture input, space information of the first image, determining, based on the space information, lighting information corresponding to the shape and position, and generating a second image by applying, based on the space information, the lighting information to the first image.

The technical problems, technical features, and effects to be achieved by the disclosure are not limited to the above-mentioned technical problems, technical features, and effects, and other technical problems, technical features, and effects that are not mentioned above can be clearly understood from the description below by those skilled in the art to which the disclosure belongs.

### [Brief Description of Drawings]

With regard to the description of the drawings, the same or like reference signs may be used to designate the same or like elements.
FIG. 1 is a block diagram illustrating an electronic device in a network environment according to various embodiments.
FIG. 2 is a flow chart illustrating an operation of generating an image based on lighting arrangement by an electronic device according to various embodiments.
FIG. 3 illustrates an example of displaying an image by an electronic device according to an embodiment.
FIG. 4 illustrates an example of a gesture input in an electronic device according to an embodiment.
FIG. 5 illustrates an example of gesture analysis in an electronic device according to an embodiment.
FIG. 6 illustrates an example of gesture analysis in an electronic device according to an embodiment.
FIG. 7 illustrates an example of image generation based on lighting arrangement of an electronic device according to an embodiment.
FIG. 8 is a flow chart illustrating an operation of generating an image based on lighting arrangement of an electronic device according to an embodiment.
FIG. 9 illustrates an example of an additional light arrangement proposal of an electronic device according to an embodiment.
FIGS. 10 and 11 illustrate examples of lighting characteristic configuration of an electronic device according to an embodiment.
FIG. 12 illustrates an example of application of lighting information according to a position relationship between a surrounding object and a light according to an embodiment.
FIG. 13 illustrates an example of a user interface for lighting information adjustment of an electronic device according to an embodiment.
FIG. 14 is a flow chart illustrating a lighting adjustment operation of an electronic device according to an embodiment.

### [Mode for the Invention]

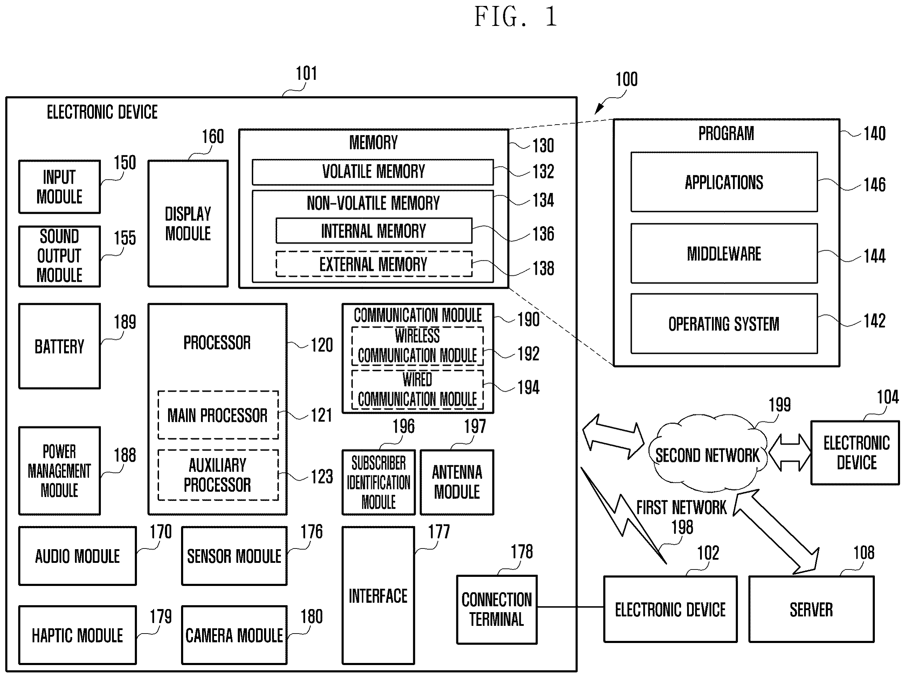

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

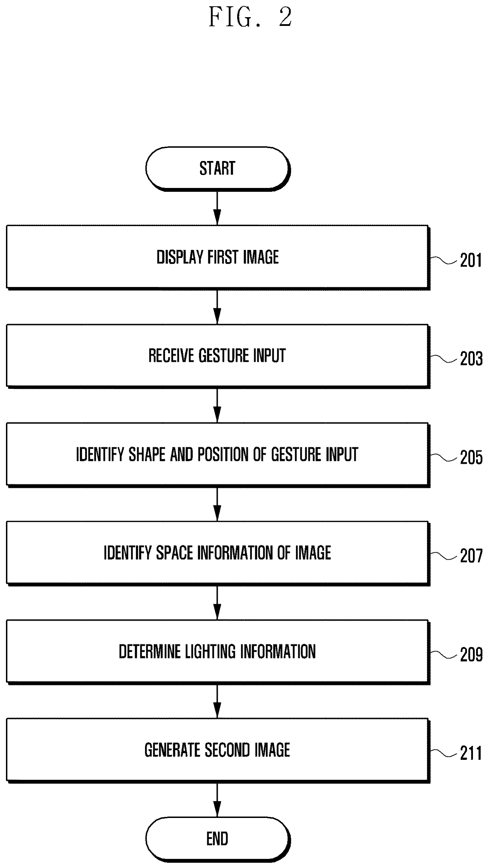

FIG. 2 is a flow chart illustrating an operation of generating an image based on lighting arrangement by an electronic device (e.g., the electronic device 101 of FIG. 1) according to various embodiments.

According to an embodiment, the electronic device 101 may add, based on a user gesture input to a display image, a virtual light, and generate a modified image by applying the added light. A user may acquire an image to which the light proposed based on space analysis and/or gesture input analysis of an image is applied, by performing a gesture input such as a simple drawing operation. To this end, the electronic device 101 may acquire space information corresponding to the image through space analysis of the image. In addition, the electronic device 101 may identify the shape and/or position of the gesture input through gesture input analysis. The electronic device 101 may determine, based on the space information, information on a light corresponding to the shape and/or position of the gesture input. The electronic device 101 may generate a modified image by applying, based on the space information, the information on the light corresponding to the shape and/or position of the gesture input to the display image.

In operation 201, the electronic device 101 may display a first image (e.g., an original image). The first image may include, for example, an image stored in a memory (e.g., the memory 130 of FIG. 1) or a cloud server (e.g., the server 108 of FIG. 1). The first image may include, for example, an image received through one or more cameras (e.g., the camera module 180 of FIG. 1). The first image may include, for example, an image received through a camera and processed by a processor (e.g. ,the processor 120 of FIG. 1) or an image processor of the camera. The first image may include, for example, a two-dimensional image or a three-dimensional image. The first image may include, for example, virtual reality (VR), augmented reality (AR), or mixed reality (MR) object images received through a camera and processed by a processor. The electronic device 101 may display the first image through a display (e.g., the display module 160 of FIG. 1). The electronic device 101 may reflect and display a three-dimensional image including the VR, AR, or MR object image on a virtual space or an actual space through a display (e.g., a head-mounted display).

In operation 203, the electronic device 101 may receive a gesture input. For example, the gesture input may include a contact or non-contact input to a touch screen (e.g., the input module 150 of FIG. 1) of the electronic device 101. For example, a contact or non-contact input to a touch screen (e.g., the input module 150 of FIG. 1) of the electronic device 101 may be included. For example, the gesture input may include a touch gesture or a hovering gesture. For example, the touch gesture may be input when touch drawing is performed on a touch screen by the user's hand or through a stylus pen. For example, the gesture input may include an input, through a camera, of a gesture by the user's hand or according to a movement of a wearable input device for the hand, the gesture being performed for a three-dimensional image including the displayed VR, AR, or MR object image.

The electronic device 101 may acquire detailed information related to the received gesture input. For example, the information related to the gesture input may be received through a text and/or voice input. For example, the text input and/or the voice input may be received from the user through an input module (e.g., the input module 150 of FIG. 1) such as a keyboard, a touch screen, and a microphone. For example, after receiving the gesture input, the electronic device 101 may receive the user's additional input related to the gesture input through the text and/or voice input. For example, the detailed information related to the gesture input may be received through an additional input such as the text input and/or the voice input upon selection by the user. The electronic device 101 may extract the detailed information related to the gesture input from the received text input and/or voice input. The extracted detailed information may reflect the user's intention in relation to the gesture input. The electronic device 101 may provide, through a touch screen and/or a speaker, a user with a notification for requesting an information input so that the user inputs information related to the gesture input, as necessary. For example, the detailed information may include various types of additional information for adding a light, such as a light addition command, information on the position of the gesture input, and a light type, number, or shape.

In operation 205, the electronic device 101 may identify the shape configured by the gesture input and the position corresponding to the gesture input on the display image. For example, the shape of the gesture input may include the shape configured by drawing, such as a dot, a line, and/or a figure. The electronic device 101 may identify the position at which the gesture input to the first image is performed. For example, the electronic device 101 may identify the location at which the gesture input is performed within the first image. For example, the electronic device 101 may identify surrounding objects at the position at which the gesture input is performed within the first image and identify a spatial position relationship between the identified objects and the gesture input, so as to additionally identify the position of the gesture input. The identification of the surrounding objects at the location at which the gesture input is performed and the identification of the spatial position relationship between the position of the gesture input and the surrounding objects may be additionally performed, based on space information identified in operation 205, after analysis of space information and/or determination of lighting information.

According to an embodiment, when receiving a specified user gesture input to the display image, the electronic device 101 may automatically execute an application for adding a light in response to the reception of the gesture input. For example, when the user performs a specified gesture input such as a drawing input to a Christmas tree object within the display image and a drawing input of drawing a line along a wall and ceiling boundary line, the electronic device 101 may automatically execute an application for adding a light according thereto.

In operation 207, the electronic device 101 may identify space information of the first image. The electronic device 101 may acquire space information of the first image through image analysis of the first image and/or metadata analysis of the first image. The space information of the first image may include identification information of a place or a space indicated by the first image, style information, and/or physical space information. For example, the identification information of the place or the space may indicate a place that the place or the space indicated by the first image corresponds to among places such as an indoor/output space, a living room, a room, a kitchen, an office, a café, and an exhibition hall. For example, the style information may indicate a style that the style of the space indicate by the first image corresponds to among styles such as a classic antique style, a vintage style, a natural style, a Northern European style, a modern style, and the Hanok style. For example, the physical space information may include spatial characteristics of objects included in the first image, such as the sizes, positions, and/or shapes of various objects such as a wall, a ceiling, a table, a character, a line, a tree, and a floor.

According to an embodiment, the electronic device 101 may additionally identify, based on the physical space information of the first image, the shape and/or position of the gesture input. For example, through identification of surrounding objects at the position at which the gesture input is performed within the first image, a position relationship between the corresponding position and surrounding objects such as a wall, a ceiling, a table, a floor, and a space next to a window, may be identified. The electronic device 101 may identify the surrounding objects at the position at which the gesture input is performed and identify a spatial position relationship by using individual pixel information and/or depth information of the first image. For example, an object overlapping with a gesture input position or a light position may be identified through an image segmentation technique such as semantic segmentation using the depth information or individual pixel information of the first image or semantic segmentation or instance segmentation using the individual pixel information, and the position of the light and/or the characteristic of the light may be determined through identification of a position relationship between the identified object and the light. For example, when a line across a specific object is specified according to a gesture input, whether to position a light determined corresponding to the gesture input in front of or behind the specific object may be determined. For example, when the light is disposed at the position of the gesture input, a part of an area in which the corresponding light is exposed from the surrounding object and/or an area in which the corresponding light is hidden by the surrounding object may be determined. For example, according to the light position and the position relationship with the sounding object, the light may function as direct light causing entire light to be exposed or indirect light causing entire light to be hidden within the first image, or the light may function as direct light at in some areas, and may function as indirect light in the other areas.

For example, the electronic device 101 may cause, based on the space information, the light to be positioned naturally in consideration of continuity of the structure and area of the space. For example, when indirect light is positioned along the boundary line of the floor and the wall, the indirect light may be applied only to a space behind an object in front of the wall. The electronic device 101 may determine the position of the light by predicting geometric arrangement of the wall and objects such as things in the first image and wall planar information, and may determine the position of the light in consideration of, for example, a part seen or not seen according to the angle of the wall.

In operation 209, the electronic device 101 may determine lighting information of the first image. For example, the lighting information may include, type, shape, style, size, or characteristic information of the light. The type of the light may include for example, a ceiling light, a down light, a chandelier, a spotlight, a cove light, a bracket, a pendant, a floor stand, a foot light, a table lamp, and a floor lamp. The shape of the light may include information on the shape such as a quadrangle, a light bulb, a rail lamp, and a plate lamp. The style of the light may include the light shape information, material characteristic, material, and/or color corresponding to a space style. The characteristic of the light may include, for example, information such as the color temperature and/or luminance of the light.

According to an embodiment, the lighting information corresponding to the space information and/or the light position may be pre-stored in a memory or a cloud server. The lighting information corresponding to the space information and/or the light position may be determined by, for example, an artificial intelligence model trained based on training data of various images that are collected through the Internet or provided in advance. For example, the lighting information may be generated by the artificial intelligence model and based on the first image, the space information on the first image, and the shape and position information according to a touch gesture.

The electronic device 101 may generate the lighting information by additionally inputting, as an artificial intelligence model input, detailed information related to the input gesture, in addition to the first image, the space information of the first image, and/or the shape and position information according to the touch gesture. The detailed information may be extracted from a user input (e.g., the text and/or voice input) additionally received after reception of the gesture input, as described above, and may reflect the user's intention on the gesture input.

The electronic device 101 may determine, based on the identified space information, lighting information corresponding to the shape and/or the position of the gesture input. For example, the type, shape, size, and characteristic of the light may be determined according to a place that the place or the space indicated by the first image corresponds to, upon the identification information of the place or the space of the first image, among spaces such as an indoor/output space, a living room, a room, a kitchen, an office, and a café. In addition, for example, the type, shape, size, and characteristic of the light may be determined according to a style that the space style indicated by the first image corresponds to, upon the identification information of the place or the space of the first image, among styles such as a classic antique style, a vintage style, a natural style, a Northern European style, a modern style, and the Hanok style. For example, the type, shape, size, and characteristic of the light may be determined according to an object that the position corresponds to, based on the physical space information of the position of the gesture input to the first image, among a wall, a ceiling, a table, a character, a line, a tree, and a floor. For example, the type, shape, size, and characteristic of the light may be determined according to the shape of the gesture input to the first image.

The electronic device 101 may determine one or more pieces of lighting information by using the identified space information and position information. When generating two or more pieces of lighting information, the electronic device 101 may determine the lighting information by providing the user with the generated lighting information through, for example, priorities, so as to allow the user to select therefrom. When, for example, a lighting type, among the pieces of information on a light, is determined, the lighting information may be determined by allowing the user to select other pieces of information of the corresponding light, for example, the shape, the design, and/or the characteristic of the light.

In operation 211, the electronic device 101 may generate a second image by applying, based on the identified space information, the lighting information to the first image. For example, the electronic device 101 may generate the second image by applying, based on the identified space information, the lighting information to various objects included in the first image and changing the brightness, the color, or the boundary line sharpness entirely or partially. For example, when the applied lighting information corresponds to a cool white-colored ceiling light having a high color temperature, a second image obtained by increasing the entire brightness of the first image to a white light may be generated through a second image generation application. For example, when the applied lighting information corresponds to a warm white-colored wall lamp having a low color temperature, a changed second image obtained by increasing the brightness of a space around the wall lamp and generally adding yellow light may be generated.

According to an embodiment, the electronic device 101 may generate the second image by applying, to the first image, the space information and the lighting information by executing an instruction stored in the memory and using an application performed by a processor, or by using a machine-learned generative artificial intelligence model for space images including various types of space information and lighting information. For example, the electronic device 101 may generate the second image to which the lighting information is applied, through the generative artificial intelligence model using, as an input, the identified space information and the determined lighting information, for example, lighting information corresponding to the position information of the gesture input identified based on the space information and the type, shape, design, size, and/or characteristic of the light, and the space information.

According to an embodiment, the electronic device 101 may provide lighting information adjustable based on the lighting information. For example, the electronic device 101 may provide an adjustment menu for a specific light through a display. For example, through the adjustment menu for the specific light, a switch-on/off, brightness or luminance adjustment, and/or color temperature adjustment menu for the specific light may be provided. Accordingly, the user may switch off the light, or may adjust the brightness or the color temperature. The specific light may include a light generated according to the above-described operations, but may also include a light that is already included in the first image. For example, the electronic device 101 may acquire lighting information by identifying the light included in the first image through image segmentation such as semantic segmentation or instance segmentation using individual pixel information. The electronic device 101 may generate the second image by applying adjusted lighting information.

The user may specify the position and/or the shape of a light to be added, through a gesture such as drawing a dot or a line on the first image, so as to cause the electronic device 101 to generate the second image by automatically selecting a suitable light through gesture analysis and analysis on the information on the space indicated by the first image and applying the same to the first image. In addition, the electronic device 101 may provide multiple suitable lights to allow the user to select therefrom.

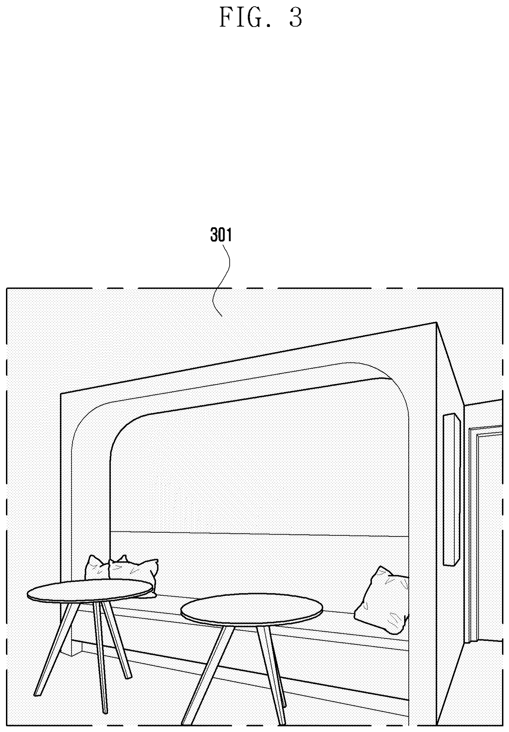

FIG. 3 illustrates an example of analyzing a space of an image displayed by an electronic device (e.g., the electronic device 101 of FIG. 1) according to an embodiment.

According to an embodiment, the electronic device 101 may display a first image (e.g., an original image) 301. The first image 301 may include, for example, an image stored in a memory (e.g., the memory 130 of FIG. 1) or a cloud server (e.g., the server 108 of FIG. 1). The first image 301 may include, for example, an image received through one or more cameras (e.g., the camera module 180 of FIG. 1). The first image 301 may include, for example, an image received through a camera and processed by a processor (e.g., the processor 120 of FIG. 1) or an image processor of a camera.

According to an embodiment, the electronic device 101 may analyze space information through image segmentation such as semantic segmentation or instance segmentation using individual pixel information and/or depth information for the first image 301 of FIG. 3. Accordingly, it may be analyzed from the first image 301 that in an indoor space including two tables and a sofa installed at a wall part, a window and a door are included, the sizes, the positions, and the shapes of ceiling and floor parts and the position and the structure of the boundary line thereof may be analyzed, and the place of the first image 301 may be analyzed as a living room or a waiting space in an office. In addition, the electronic device 101 may analyze that the first image 301 has a modern style.

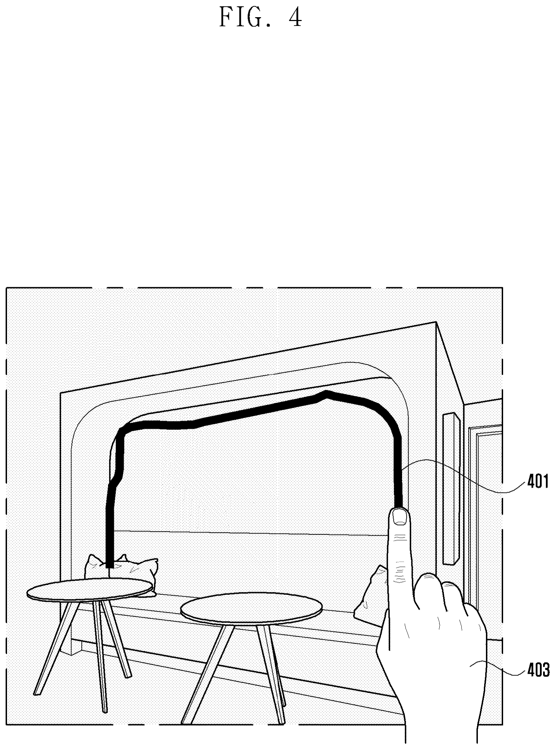

FIG. 4 illustrates an example of a gesture input in an electronic device (e.g., the electronic device 101 of FIG. 1) according to an embodiment.

According to an embodiment, a user may perform a contact or non-contact gesture input by performing a drawing gesture 401 by using a hand or an input device 403 such as a stylus pen. For example, the gesture input may include a contact or non-contact input to a touch screen (e.g., the input module 150 of FIG. 1) of the electronic device 101. For example, a contact or non-contact input to a touch screen (e.g., the input module 150 of FIG. 1) of the electronic device 101 may be included. For example, the gesture input may include a touch gesture or a hovering gesture

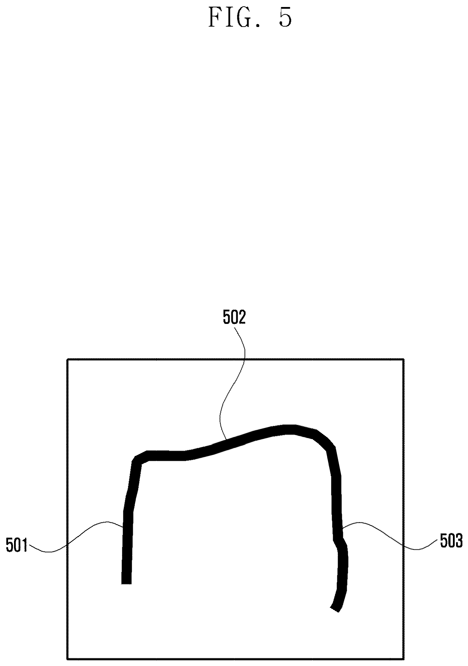

FIG. 5 illustrates an example of gesture analysis in an electronic device (e.g., the electronic device 101 of FIG. 1) according to an embodiment.

According to an embodiment, the electronic device 101 may identify the shape and the position of the received gesture input. For example, the shape of the gesture input may include a shape corresponding to a drawing such as a dot, a line, and/or a figure. For example, the electronic device 101 may identify the position at which the gesture input is performed within the first image to be a shape of an arch curved line including a first part 501 extending from the bottom to the top along the inner edge of a decoration wall installed to protrude from a wall at which a sofa is positioned, a second part 502 curved at the top and then extending in a transverse direction, and a third part 503 curved again and then extending to the bottom.

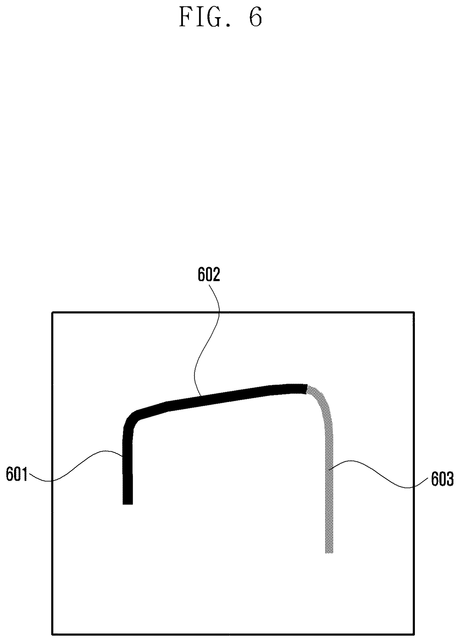

FIG. 6 illustrates an example of additional gesture analysis in an electronic device (e.g., the electronic device 101 of FIG. 1) according to an embodiment.

According to an embodiment, the electronic device 101 may identify, based on the space information within the first image, objects around the position at which the gesture input is performed, identify, based on semantic segmentation or instance segmentation based on depth information and/or individual pixel information, a spatial position relationship between the identified objects and the gesture input, and additionally identify the position of the gesture input. For example, the first part 601 extending from the bottom to the top, the second part 602 curved at the top and then extending in the transverse direction, and third part 603 extending from the top to the bottom may be analyzed as a structure in which each of the parts is a straight line, the respective parts are connected to each other while each connection part thereof has a curved surface. For example, the position at which the gesture input is performed within the first image may be analyzed that the gesture input is positioned along the inner edge of a decoration wall protruding from a wall at which a sofa is positioned, is positioned behind with reference to tables and cushions on the sofa, and is positioned on the same surface as the back of the sofa installed on a wall surface. For example, it may be analyzed that from the front surface of the image, lights arranged at the first part 601 and the second part 602 may be directly exposed to the front and the third part is hidden by the protruding decoration wall. Accordingly, it may be analyzed that the lights at the first part 601 and the second part 602 apply direct light, and the light at the third part 603 applies indirect light.

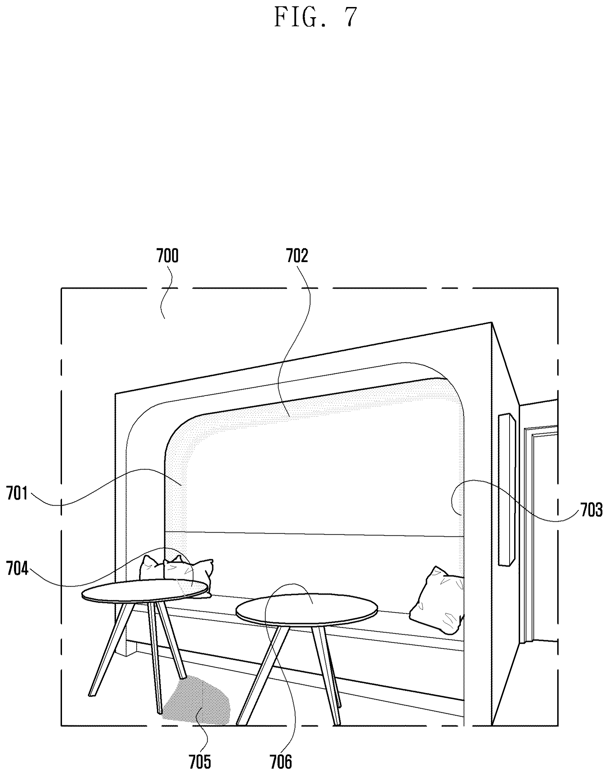

FIG. 7 illustrates an example of image generation based on lighting arrangement of an electronic device (e.g., the electronic device 101 of FIG. 1) according to an embodiment.

According to an embodiment, the electronic device 101 may determine, based on the space information of the first image (e.g., the first image 301 of FIG. 3), lighting information corresponding to the shape of the gesture input and the position at which the gesture input is performed, and generate a second image 700 of FIG. 7 by applying, based on the space information, the lighting information to the first image 301. The second image may be generated by applying, based on the space information, lights to a first part 701 extending from the bottom to the top, a second part 702 curved at the top and then extending in a transverse direction, and a third part 703 extending from the top to the bottom, which correspond to the gesture input. For example, the first part 701 and the second part 702 to which lights are applied in the second image correspond to direct light, and the brightness increases in a frontal direction so that a part 704 on a table gets relatively brighter and a shadow effect 705 can be added to the parts thereunder. The third part 703 in the second image 700 corresponds to indirect light so that the brightness in the frontal direction may not have a change, thus the brightness on the table 706 in front of the third part may be the same, and the edge of the wall surface on the inner side of the sofa may get very lightly brighter since the brightness of the area reflected toward the wall surface or the upper part of the sofa in the backward direction of the third part gets relatively and slightly increases.

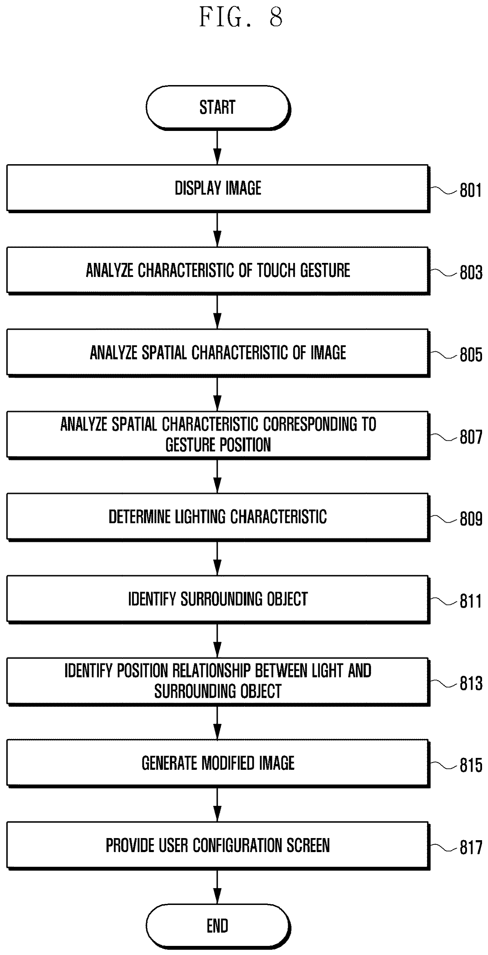

FIG. 8 is a flow chart illustrating an operation of generating an image based on lighting arrangement of an electronic device (e.g., the electronic device 101 of FIG. 1) according to an embodiment.

According to an embodiment, the electronic device 101 may analyze, based on a user gesture input to a displayed image, a characteristic of the gesture input, analyze a spatial characteristic of the image, add, based on the analysis of the spatial characteristic corresponding to a gesture position, a virtual light, and generate a corrected image by applying the added light. The electronic device 101 may provide a user interface for adjusting the added virtual light.

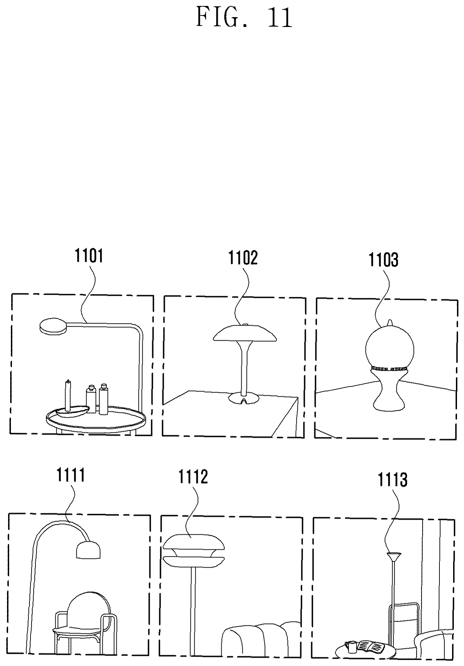

In operation 801, the electronic device 101 may display an original image (e.g., a first image). The first image may include, for example, an image stored in a memory (e.g., the memory 130 of FIG. 1) or a cloud server (e.g., the server 108 of FIG. 1). The first image may include, for example, an image received through one or more cameras (e.g., the camera module 180 of FIG. 1). The first image may include, for example, an image received through a camera and processed by a processor (e.g., the processor 120 of FIG. 11) or an image processor of the camera. The first image may include, for example, a two-dimensional image or a three-dimensional image. The first image may include, for example, virtual reality (VR), augmented reality (AR), or mixed reality (MR) object images received through a camera and processed by a processor. The electronic device 101 may display the first image on a display (e.g., the display module 160 of FIG. 1). The electronic device 101 may reflect and display a three-dimensional image including the VR, AR, or MR object image on a virtual space or an actual space through a display (e.g., a head-mounted display).

In operation 803, the electronic device 101 may receive a gesture input while the first image is displayed, and analyze a characteristic of a gesture. For example, the gesture may be received through a contact or non-contact input to a touch screen (e.g., the input module 150 of FIG. 1) of the electronic device 101 according to a drawing gesture by the user's hand or through a stylus pen. For example, the gesture input may include an input, through a camera, of a gesture by the user's hand or according to a movement of a wearable input device for the hand while a three-dimensional image including a VR, AR, or MR object image is displayed.

The electronic device 101 may analyze, for example, a gesture characteristic including the shape corresponding to a drawing such as a dot, a line, and/or a figure and the position at which a gesture to the first image is performed.

In operation 805, the electronic device 101 may analyze a spatial characteristic of the first image. The electronic device 101 may analyze a spatial characteristic of the first image by using metadata of the first image and/or an image segmentation technique such as semantic segmentation or instance segmentation of the first image. For example, the spatial characteristic of the first image may be analyzed based on various types of information such as object information, depth information, or place information included in the metadata of the first image. For example, depth information of the first image may be acquired through space map analysis of the first image. For example, an individual pixel may be divided, based on individual pixel information of the first image, into pixel areas included in different categories, the position of each of the categories may be identified, and a symbol represented by each of the categories may be determined so that the categories and the positions of different objects or the category and the position of an object may be analyzed. The electronic device 101 may derive based on the analyzed objects, information indicating spatial characteristics, such as identification information of a place or a space indicated by the first image, style information, and/or physical space information. For example, the identification information of the place or the space may indicate a place that the place or the space indicated by the first image corresponds to among places such as an indoor/output space, a living room, a room, a kitchen, an office, a café, and an exhibition hall. For example, the style information may indicate a style that the style of the space indicate by the first image corresponds to among styles such as a classic antique style, a vintage style, a natural style, a Northern European style, a modern style, and the Hanok style. For example, the physical space information may include characteristics such as the size, the position, and/or the shape of various objects included in the first image, such as a wall, a ceiling, a table, a character, a line, a tree, and a floor.

In operation 807, the electronic device 101 may analyze a spatial characteristic corresponding to the position at which a gesture input is performed within the first image. For example, an object that the position at which the gesture input is performed corresponds to among objects such as a wall, a ceiling, a table, a character, a line, a tree, and a floor within the first image may be analyzed.

In operation 809, the electronic device 101 may determine, based on the spatial characteristic of the first image and the spatial characteristic corresponding to the gesture position, a lighting characteristic corresponding to the gesture. For example, the lighting characteristic may include information on the type, the shape, the style, the size, or the detailed characteristic of a light. The type of the light may include a ceiling light, a down light, a chandelier, a spotlight, a cove light, a bracket, a pendant, a floor stand, a foot light, a table lamp, and a floor lamp. The shape of the light may include information on the shape such as a quadrangle, a light bulb, a rail lamp, and a plate lamp. The style of the light may include the light shape information, material characteristic, material, and/or color corresponding to a space style. The detailed characteristic of the light may include, for example, information such as the color temperature and/or luminance of the light. The detailed characteristic of the light may be additionally determined after other lighting characteristics are determined.

The electronic device 101 may determine, based on an object characteristic corresponding to the position at which the gesture input is performed, the lighting characteristic. For example, for a character, neon sign lights may be added. For example, for gesture inputs indicating dots input at the ceiling position, a ceiling downlight may be added. For example, for a line gesture input that is input along the edge of a tent, light bulbs installed at the edge of the tent may be added. For example, for a line or figure gesture input to a Christmas tree, a Christmas light may be added. For example, for a circle gesture input at the center of the ceiling, a chandelier may be added. For example, a figure gesture input to a person, a spotlight may be added.

The electronic device 101 may generate two or more pieces of lighting information according to the determined lighting characteristic, and determine the lighting characteristic by providing the pieces of generated lighting information to the user through, for example, a display, and allowing the user to selected therefrom. When, for example, a lighting type, among the pieces of information on a light, is determined, the lighting characteristic may be determined by allowing the user to select other pieces of information of the corresponding light, for example, the shape, the design, and/or the characteristic of the light.

In operation 811, the electronic device 101 may identify, using depth information and/or individual pixel information of the first image, objects around the position at which the gesture input is performed. In operation 813, the electronic device 101 may identify a spatial position relationship between the identified objects and the gesture input position so as to analyze a spatial characteristic corresponding to the position of the gesture input. The analysis of the spatial characteristic corresponding to the position at which the gesture input is performed may include identification of a characteristic of a drawing on an object in the displayed first image, for example, a line drawn along a wall or ceiling line or boundary line, a line drawn along a tent line, a dot or a line drawn on an object, a figure drawn while surrounding the boundary line of a character or an object, and dots or a figure drawn at a specific position of the ceiling. The analysis of the spatial characteristic corresponding to the position at which the gesture input is performed may include analyzing a position relationship between surrounding objects according to the identified drawing characteristic. For example, surrounding object at the position at which the gesture input is performed in the first image may be identified and a position relationship with the surrounding objects such as a wall, a ceiling, a table, a floor, and a space next to a window, which are around the corresponding position. For example, the position of a specific object (e.g., person) that a line drawn along the wall or ceiling line or boundary line crosses may be identified to be ahead of the position of the corresponding line. For example, an oval-shaped figure drawn while including a part of the edge of a specific object (e.g., table) may be identified to be ahead of the corresponding object. For example, a straight line vertically drawn while including a part of a middle part of a specific object (e.g., table) may be identified to be positioned behind the corresponding object.

In operation 815, the electronic device 101 may dispose a light according to the determined lighting characteristic at the gesture input position in consideration of the spatial position relationship between the gesture input position and the identified objects, and may generate a modified image (e.g., a second image) by applying the disposed light. For example, the electronic device 101 may generate a second image by entirely or partially changing the brightness, the color, or the sharpness of the boundary line through application, based on the spatial characteristic information, of the lighting characteristic to various objects include in the first image. For example, when the applied lighting information corresponds to a cool white-colored ceiling light having a high color temperature, a second image obtained by increasing the entire brightness of the first image to a white light may be generated through a second image generation application. For example, when the applied lighting information corresponds to a warm white-colored wall lamp having a low color temperature, a changed second image obtained by increasing the brightness of a space around the wall lamp and generally adding yellow light may be generated.

According to an embodiment, the electronic device 101 may generate the second image by applying, to the first image, the spatial characteristic information and the lighting characteristic information by executing an instruction stored in the memory and using an application performed by a processor, or by using a machine-learned generative artificial intelligence model for space images including various types of spatial characteristic information and lighting characteristic information. For example, the electronic device 101 may generate the second image to which a light added through the generative artificial intelligence model is applied, the generative artificial intelligence model using, as an input, the spatial characteristic information determined according to the identified space information the spatial characteristic corresponding to the gesture input position and the position relationship information of the light and the surrounding object at the gesture input position.

In operation 817, the electronic device 101 may provide a user configuration screen for the light added to the second image through, for example, a display. The user configuration screen may include a menu enabling configuration of each light. For example, the user configuration screen may provide a switch-on/off, brightness or luminance adjustment, and/or color temperature adjustment menu for each light. Accordingly, the user may switch off the light or adjust the brightness and the color temperature.

According to an embodiment, the electronic device 101 may generate the second image by applying, to the first image, the space information and the lighting information by executing an instruction stored in the memory and using an application performed by a processor, or by using a machine-learned generative artificial intelligence model for space images including various types of space information and lighting information. For example, the electronic device 101 may generate the second image to which the lighting information is applied, through the generative artificial intelligence model using, as an input, the identified space information and the determined lighting information, for example, lighting information corresponding to the position information of the gesture input identified based on the space information and the type, shape, design, size, and/or characteristic of the light, and the space information.

According to an embodiment, the electronic device 101 may provide, based on the lighting information, adjustable lighting information. For example, the electronic device 101 may provide, through a display, a menu for adjusting a specific light. For example, through the adjustment menu for the specific light, a switch-on/off, brightness or luminance adjustment, and/or color temperature adjustment menu for the specific light may be provided. Accordingly, the user may switch off the light, or may adjust the brightness or the color temperature. The specific light may include a light generated according to the above-described operations, but may also include a light that is already included in the first image. For example, the electronic device 101 may acquire lighting information by identifying the light included in the first image through image segmentation such as semantic segmentation or instance segmentation. The electronic device 101 may generate the second image by applying adjusted lighting information.

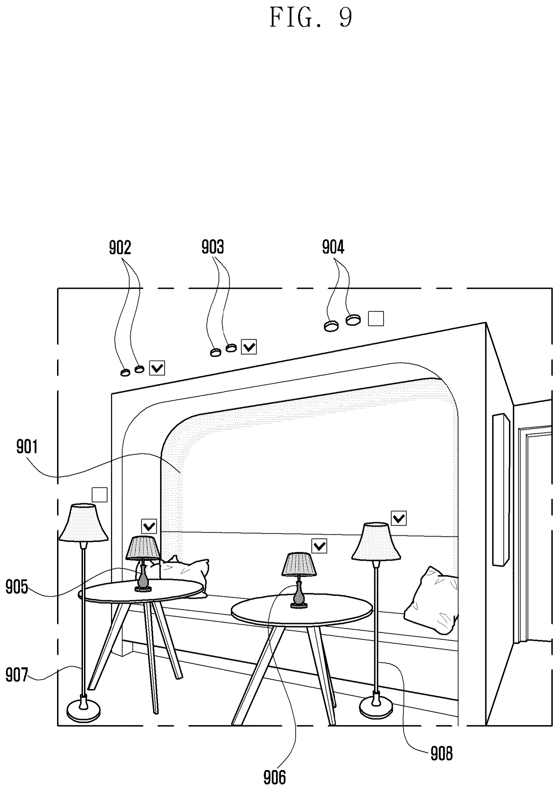

FIG. 9 illustrates an example of an additional light arrangement proposal of an electronic device (e.g., the electronic device 101 of FIG. 1) according to an embodiment.

Referring to FIG. 9, the electronic device 101 may propose an additional light in addition to a light 901 generated according to a user gesture input. The electronic device 101 may propose, based on spatial characteristic information analyzed for a displayed image, an additional light. For example, the electronic device 101 may propose, based on spatial characteristic information such as identification information of a space, style information, and/or physical space information, an additional light. For example, the electronic device 101 may propose addition of a downlight 902, 903, or 904 to the ceiling included in the displayed image, propose addition of a table lamp 905 or 906 on tables, or propose addition of a floor stand 907 or 908 to the floor.

According to an embodiment, the electronic device 101 may provide a user interface for selection of the proposed additional light. For example, the electronic device 101 may display the proposed light to be blurry or flickering and induce a touch input to the corresponding light so as to allow the light to be selected. For example, the electronic device 101 may display, for example, a square checkbox, at the position or around the proposed additional light, and allow the corresponding light to be additionally disposed on the image as the displayed checkbox is selected by the user.

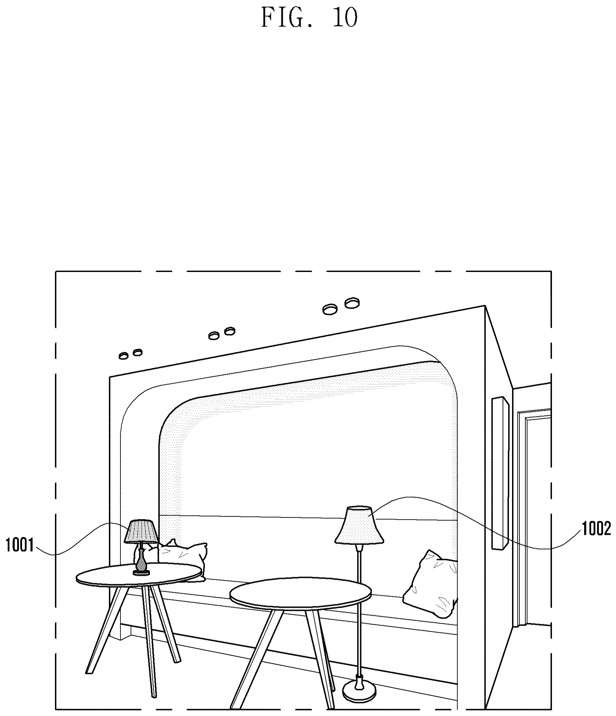

FIGS. 10 and 11 illustrate examples of lighting characteristic configuration of an electronic device according to an embodiment.

Referring to FIG. 10, the electronic device 101 may provide a user interface for configuring lighting characteristic information for a light in an image. The light in the image may include a light already existing in the image, a light additionally disposed by the user, or a light additionally disposed according to an additional proposal.

Referring to FIG. 10, a user interface for configuring lighting characteristic information for, for example, a table lamp 1001 or a floor stamp 1002, among lights in the image, may be provided.

Referring to FIG. 11, the user interface for configuring the lighting characteristic information of the table lamp 1001 may provide, for example, various table lamp designs 1101, 1102, and 1103, so as to allow the user to select a light design. The user interface for configuring the lighting characteristic information of the floor stand 1002 may provide, for example, various floor stand designs 1111, 1112, and 1113, so as to allow the user to select a light design.

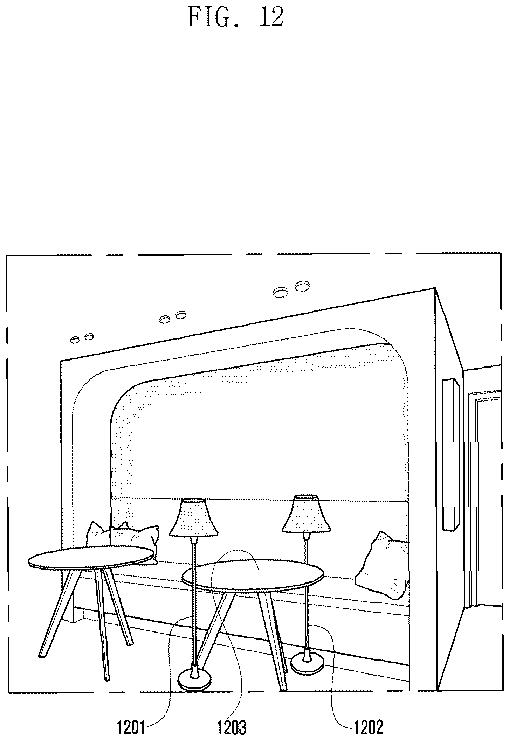

FIG. 12 illustrates an example of application of lighting information according to a position relationship between a surrounding object and a light according to an embodiment.

Referring to FIG. 12, when the position of a user gesture input and a specific surrounding object (e.g., a table) 1203 are overlapped with each other, the electronic device 101 may analyze a position relationship between the position of the specific object and an added light and adjust, based on the analysis, the position of the light. For example, the shape and the position of a drawing corresponding to the user gesture input correspond to an oval-shaped figure drawn while including a part of the edge of the specific object 1203, a light 1201 may be determined to be positioned in front of the specific object 1203. For example, the shaped and the position of a drawing corresponding to the user gesture input correspond to an oval-shaped figure drawn while including a part of a middle part of the specific object 1203, a light 1202 may be determined to be positioned behind the specific object 1203.

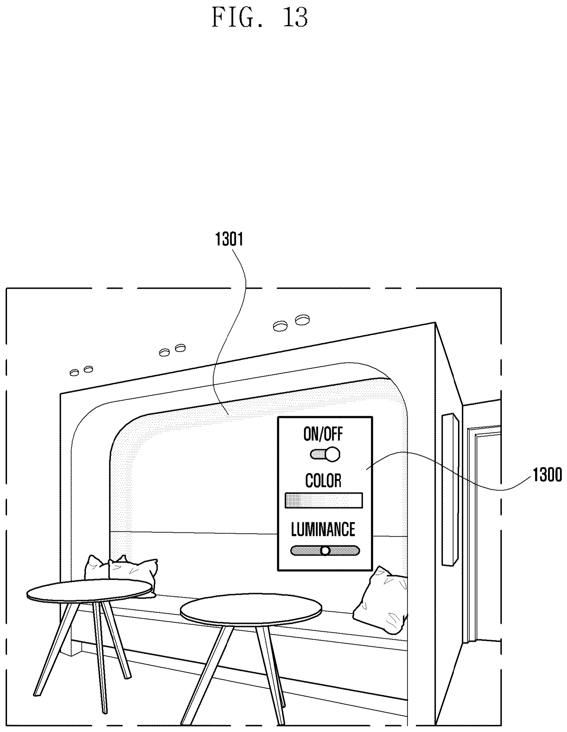

FIG. 13 illustrates an example of a user interface for lighting information adjustment of an electronic device according to an embodiment.

Referring to FIG. 13, the electronic device 101 may provide a user interface for configuring lighting characteristic information for a light in an image. The light in the image may include a light already existing in the image, a light additionally disposed by the user, or a light additionally disposed according to an additional proposal.

Referring to FIG. 13, a user interface for configuring lighting characteristic information of, for example, the light 1301 disposed at the inner side of a decoration wall, among lights in the image, may be provided. For example, when the user selects an area of a light 1301, through, for example, a touch input, the electronic device 101 may provide a user interface screen 1300 for adjusting characteristic information of the light 1301, in the form of, for example, a pop-up window. The user interface screen 1300 may include, for example, a switch on/off adjustment menu, a color temperature adjustment menu, and/or a luminance adjustment menu of the light 1301.

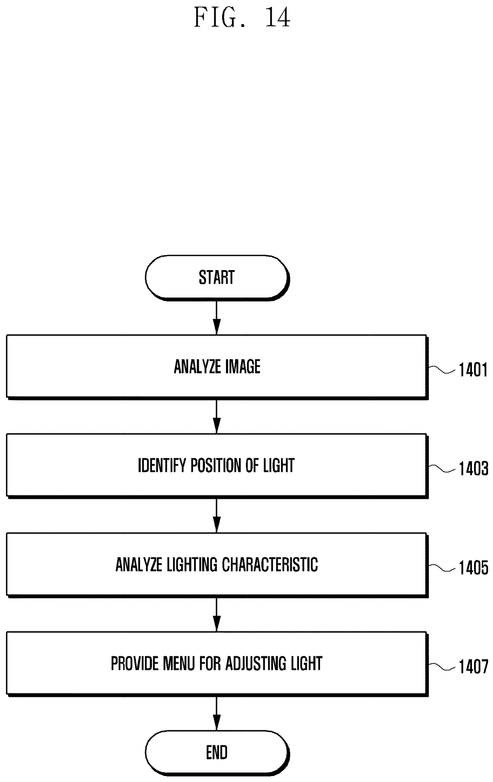

FIG. 14 is a flow chart illustrating a lighting adjustment operation of an electronic device (e.g., the electronic device 101 of FIG. 1) according to an embodiment.

Referring to FIG. 14, the electronic device 101 may analyze a displayed first image in operation 1401 and identify the position of a light in operation 1403. The light identified from the first image may include, for example, a light generated according to the operation of FIG. 2 or FIG. 8, and may also include a light already existing in the first image. For example, the electronic device 101 may analyze the first image through an image segmentation method such as semantic segmentation or instance segmentation using individual pixel information, identify an object, and identify the position of the light among the identified object.

In operation 1405, the electronic device 101 may analyze a characteristic of the identified light. For example, the electronic device 101 may analyze the brightnesses and the colors of the light area and the surrounding part thereof identified in the first image, to identify characteristics such as the luminance and/or the color temperature of the light. For example, the electronic device 101 may identify the shaped and the position of the light identified in the first image to identify characteristics such as the type, the design, and the shape of the light.

In operation 1407, the electronic device 101 may provide, based on the analyzed characteristics of the light, a menu for adjusting the characteristic of the light through, for example, a display. For example, an adjustment menu for a specific light may provide a switch on/off, brightness or luminance adjustment, and/or color temperature adjustment menu for the identified light. Accordingly, the user may switch off the light or adjust the brightness or the color temperature. The electronic device 101 may generate the second image by applying the adjusted lighting information.

A method of an electronic device according to various embodiments may include displaying a first image, receiving a gesture input to the first image, identifying a shape configured by the gesture input and a position on the first image of the gesture input, identifying, based on the gesture input, space information of the first image, determining, based on the space information, lighting information corresponding to the shape and position, and generating a second image by applying, based on the space information, the lighting information to the first image

According to various embodiments, the method may further include identifying, based on the space information, a surrounding object at the position, wherein the generating of the second image may include generating the second image by applying the lighting information to the identified surrounding object.

According to various embodiments, the method may include applying, based on a spatial position relationship between the identified surrounding object and the lighting information, the lighting information to the identified surrounding object, wherein the spatial position relationship may be identified based on image segmentation or depth information of the first image.

According to various embodiments, the method may further include displaying the lighting information on the first image through a display, and receiving an input of selection of the displayed lighting information.

According to various embodiments, the lighting information may include two or more pieces of lighting selection information.

According to various embodiments, the input of selection may include an input of selection of turning on or off the two or more piece of lighting selection information, a detailed characteristic selection input, or a detailed characteristic adjustment input.

According to various embodiments, the method may further include identifying, based on the space information, two or more pieces of lighting information of the first image, displaying the two or more pieces of lighting information on the first image through the display, and receiving an input of selection of the two or more pieces of lighting information.

According to various embodiments, in the method, the space information may include identification information of a space corresponding to the first image, style information, and physical space information.

According to various embodiments, in the method, the lighting information may include type information, shape information, size information, or characteristic information of a light, and one or more of the type information, the shape information, the size information, or the characteristic information of the light may be determined based on one or more of the identification information of the space, the style information, or the physical space information.

According to various embodiments, the method may further include providing, through a display, a menu for selecting or adjusting one or more of the type information, the shape information, the size information, or the characteristic information of the light.

According to various embodiments, an electronic device (e.g., the electronic device 101 of FIG. 1) may include a touch display (e.g., the display module 160 and/or the input module 150 of FIG. 1), a memory (e.g., the memory 130 of FIG. 1) including an instruction, and a processor (e.g., the processor 120 of FIG. 1). The instruction may be configured to, when executed by the processor, cause the electronic device to display a first image through the display, receive a gesture input to the first image, identify a shape configured by the gesture input and a position on the first image of the gesture input, identify, based on the gesture input, space information of the first image, determine, based on the space information, lighting information corresponding to the shape and position, and generate a second image by applying, based on the space information, the lighting information to the first image.

According to various embodiments, the instruction may be configured to, when executed by the processor, cause the electronic device to identify, based on the space information, a surrounding object at the position, and generate the second image by applying the lighting information to the identified surrounding object.

According to various embodiments, the instruction may be configured to, when executed by the processor, cause the electronic device to apply, based on a spatial position relationship between the identified surrounding object and the lighting information, the lighting information to the identified surrounding object, and identify, based on image segmentation or depth information of the first image, the spatial position relationship.

According to various embodiments, the instruction may be configured to, when executed by the processor, cause the electronic device to display the lighting information on the first image through the display, and receive an input of selection of the displayed space information.

According to various embodiments, the lighting information may include one or more pieces of lighting selection information.

According to various embodiments, the input of selection may include an input of selection of turning on or off the two or more pieces of lighting selection information, a detailed characteristic selection input, or a detailed characteristic adjustment input.

According to various embodiments, the instruction may be configured to, when executed by the processor, cause the electronic device to identify, based on the space information, two or more images of lighting information of the first image, display the two or more pieces of lighting information on the first image through the display, and receive an input of selection of the two or more pieces of lighting information.

According to various embodiments, the space information may include identification information of a space corresponding to the first image, style information, and a physical space information.

According to various embodiments, the lighting information may include type information, shape information, size information, or characteristic information of a light, and the instruction may be configured to, when executed by the processor, cause the electronic device to determine, based on one or more of the identification of the space, the stye information, or the physical space information, one or more of the type information, the shape information, the size information, or the characteristic information of the light.

According to various embodiments, the instruction may be configured to, when executed by the processor, cause the electronic device to provide, through the display, a menu for selecting or adjusting one or more of the type information, the shape information, the size information, or the characteristic information of the light.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., module or program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

A method of an electronic device (e.g., the electronic device 101 of FIG. 1) according to various embodiments may include displaying a first image, receiving a gesture input to the first image, identifying a shape configured by the gesture input and a position on the first image of the gesture input, identifying, based on the gesture input, space information of the first image, determining, based on the space information, lighting information corresponding to the shape and position, and generating a second image by applying, based on the space information, the lighting information to the first image.

According to various embodiments, the method may further include identifying, based on the space information, a surrounding object at the position, wherein the generating of the second image may include generating the second image by applying the lighting information to the identified surrounding object.

According to various embodiments, the method may include applying, based on a spatial position relationship between the identified surrounding object and the lighting information, the lighting information to the identified surrounding object, wherein the spatial position relationship may be identified based on image segmentation or depth information of the first image.

According to various embodiments, the method may further include displaying the lighting information on the first image through a display, and receiving an input of selection of the displayed lighting information.

According to various embodiments, the lighting information may include two or more pieces of lighting selection information.

According to various embodiments, the input of selection may include an input of selection of turning on or off the two or more piece of lighting selection information, a detailed characteristic selection input, or a detailed characteristic adjustment input.

According to various embodiments, the method may further include identifying, based on the space information, two or more pieces of lighting information of the first image, displaying the two or more pieces of lighting information on the first image through the display, and receiving an input of selection of the two or more pieces of lighting information.

According to various embodiments, in the method, the space information may include identification information of a space corresponding to the first image, style information, and physical space information.

According to various embodiments, in the method, the lighting information may include type information, shape information, size information, or characteristic information of a light, and one or more of the type information, the shape information, the size information, or the characteristic information of the light may be determined based on one or more of the identification information of the space, the style information, or the physical space information.

According to various embodiments, the method may further include providing, through a display, a menu for selecting or adjusting one or more of the type information, the shape information, the size information, or the characteristic information of the light.

An electronic device (e.g., the electronic device 101 of FIG. 1) according to various embodiments may include a touch display (e.g., the display module 160 and the input module 150 of FIG. 1), a memory (e.g., the memory 130 of FIG. 1) including an instruction, and a processor (e.g., the processor 120 of FIG. 1). The instruction may be configured to, when executed by the processor, cause the electronic device to display a first image through the display, receive a gesture input to the first image, identify a shape configured by the gesture input and a position on the first image of the gesture input, identify, based on the gesture input, space information of the first image, determine, based on the space information, lighting information corresponding to the shape and position, and generate a second image by applying, based on the space information, the lighting information to the first image.

According to various embodiments, the instruction may be configured to, when executed by the processor, cause the electronic device to identify, based on the space information, a surrounding object at the position, and generate the second image by applying the lighting information to the identified surrounding object.

According to various embodiments, the instruction may be configured to, when executed by the processor, cause the electronic device to apply, based on a spatial position relationship between the identified surrounding object and the lighting information, the lighting information to the identified surrounding object, and identify, based on image segmentation or depth information of the first image, the spatial position relationship.

According to various embodiments, the instruction may be configured to, when executed by the processor, cause the electronic device to display the lighting information on the first image through the display, and receive an input of selection of the displayed space information.

According to various embodiments, the lighting information may include one or more pieces of lighting selection information.

According to various embodiments, the input of selection may include an input of selection of turning on or off the two or more pieces of lighting selection information, a detailed characteristic selection input, or a detailed characteristic adjustment input.

According to various embodiments, the instruction may be configured to, when executed by the processor, cause the electronic device to identify, based on the space information, two or more images of lighting information of the first image, display the two or more pieces of lighting information on the first image through the display, and receive an input of selection of the two or more pieces of lighting information.

According to various embodiments, the space information may include identification information of a space corresponding to the first image, style information, and a physical space information.

According to various embodiments, the lighting information may include type information, shape information, size information, or characteristic information of a light, and the instruction may be configured to, when executed by the processor, cause the electronic device to determine, based on one or more of the identification of the space, the stye information, or the physical space information, one or more of the type information, the shape information, the size information, or the characteristic information of the light.

According to various embodiments, the instruction may be configured to, when executed by the processor, cause the electronic device to provide, through the display, a menu for selecting or adjusting one or more of the type information, the shape information, the size information, or the characteristic information of the light.

Embodiments disclosed herein are provided merely to describe technical details of the disclosure and to help the understanding of the disclosure, and do not limit the scope of the disclosure. Therefore, it should be construed that, in addition to the embodiments disclosed herein, all modifications and changes or modified and changed forms derived from the technical idea of various embodiments disclosed herein fall within the scope of the disclosure.

## Claims

1. A method of an electronic device, the method comprising:
displaying a first image;
receiving a gesture input to the first image;
identifying a shape configured by the gesture input and a position on the first image of the gesture input;
identifying, based on the gesture input, space information of the first image;
determining, based on the space information, lighting information corresponding to the shape and position; and
generating a second image by applying, based on the space information, the lighting information to the first image.

2. The method of claim 1, further comprising identifying, based on the space information, a surrounding object at the position,
wherein the generating of the second image comprises generating the second image by applying the lighting information to the identified surrounding object.

3. The method of claim 2, wherein the lighting information is applied, based on a spatial position relationship between the identified surrounding object and the lighting information, to the identified surrounding object, and
wherein the spatial position relationship is identified based on image segmentation or depth information of the first image.

4. The method of claim 1, further comprising:
displaying the lighting information on the first image through a display; and
receiving an input of selection of the displayed lighting information.

5. The method of claim 4, wherein the lighting information comprises two or more pieces of lighting selection information, and wherein the input of selection comprises an input of selection of turning on or off the two or more piece of lighting selection information, a detailed characteristic selection input, or a detailed characteristic adjustment input.

6. An electronic device comprising:
a touch display;
a memory comprising an instruction; and
a processor,
wherein the instruction is configured to, when executed by the processor, cause the electronic device to:
display a first image through the display;
receive a gesture input to the first image;
identify a shape configured by the gesture input and a position on the first image of the gesture input;
identify, based on the gesture input, space information of the first image;
determine, based on the space information, lighting information corresponding to the shape and position; and
generate a second image by applying, based on the space information, the lighting information to the first image.

7. The electronic device of claim 6, wherein the instruction is configured to, when executed by the processor, cause the electronic device to:
identify, based on the space information, a surrounding object at the position; and
generate the second image by applying the lighting information to the identified surrounding object.

8. The electronic device of claim 7, wherein the instruction is configured to, when executed by the processor, cause the electronic device to:
apply, based on a spatial position relationship between the identified surrounding object and the lighting information, the lighting information to the identified surrounding object; and
identify, based on image segmentation or depth information of the first image, the spatial position relationship.

9. The electronic device of claim 6, wherein the instruction is configured to, when executed by the processor, cause the electronic device to:
display the lighting information on the first image through the display; and
receive an input of selection of the displayed space information.

10. The electronic device of claim 9, wherein the lighting information comprises one or more pieces of lighting selection information.

11. The electronic device of claim 10, wherein the input of selection comprises an input of selection of turning on or off the two or more pieces of lighting selection information, a detailed characteristic selection input, or a detailed characteristic adjustment input.

12. The electronic device of claim 9, wherein the instruction is configured to, when executed by the processor, cause the electronic device to:
identify, based on the space information, two or more images of lighting information of the first image;
display the two or more pieces of lighting information on the first image through the display; and
receive an input of selection of the two or more pieces of lighting information.

13. The electronic device of claim 6, wherein the space information comprises identification information of a space corresponding to the first image, style information, and a physical space information.

14. The electronic device of claim 13, wherein the lighting information comprises type information, shape information, size information, or characteristic information of a light, and
wherein the instruction is configured to, when executed by the processor, cause the electronic device to determine, based on one or more of the identification of the space, the stye information, or the physical space information, one or more of the type information, the shape information, the size information, or the characteristic information of the light.

15. The electronic device of claim 14, wherein the instruction is configured to, when executed by the processor, cause the electronic device to provide, through the display, a menu for selecting or adjusting one or more of the type information, the shape information, the size information, or the characteristic information of the light.
